# FASCICULE DE BREVET EUROPEEN

(11) **EP 2 255 620 B1**
(45) Date de publication et mention de la délivrance du brevet: **19.02.2014**
(21) Numéro de dépôt: 10163574.6
(22) Date de dépôt: 21.05.2010
(51) Int. Cl.: A01M 21/04

(54) **Procédé de traitement contre l'ambroisie**
Behandlungsverfahren gegen Ambrosia (Pollenallergie)
Method for treatment against ragweed

(30) Priorité: 28.05.2009 FR 0953527
(43) Date de publication de la demande: 01.12.2010
(73) Titulaire: Eratec, 38290 Satolas et Bonce (FR)
(72) Inventeur: Rogemond, Eric, 38290, Satolas-et-Bonce (FR); Demarchi, Norbert, 74000, Annecy (FR)
(74) Mandataire: Chevalier, Renaud Philippe

(56) Documents cités:
- EP-A1- 0 846 414
- EP-A1- 0 883 989
- WO-A1-00/47043
- CH-A5- 663 319
- DE-U1- 9 112 971
- US-A1- 2005 271 995
- US-A1- 2009 032 012

## Description

La présente invention se rapporte à un procédé de traitement contre l'ambroisie.

Originaire d'Amérique du nord, l'ambroisie, est une plante apparue en Europe à la fin du XIX^{e} siècle. L'ambroisie est notamment connue pour son caractère envahissant, nuisible pour la biodiversité. Par ailleurs, les plants d'ambroisie produisent des pollens fortement allergènes, constituant ainsi un problème de santé publique.

Afin de lutter contre la prolifération de l'ambroisie, il existe trois techniques principales : l'arrachage, le fauchage et le désherbage chimique. Ces techniques présentent plusieurs inconvénients.

Tout d'abord, l'arrachage est exigeant en temps et main d'oeuvre, rendant par là-même cette technique difficile à mettre en oeuvre pour des grandes surfaces d'infestation de plants d'ambroisie.

Ensuite, le fauchage est une technique non sélective, éliminant également les végétaux situés à proximité des plants d'ambroisie. De plus, il a été démontré par Basset et Crampton en 1975 que le fauchage favorise une deuxième montée en fleur plus rapide des plants d'ambroisie.

Enfin, le désherbage chimique est également une technique non sélective avec des risques importants d'impacts écologiques sur la végétation herbacée à proximité des plants d'ambroisie. Le document DE 9 112 971 U1 décrit un procédé de traitement de mauvaise herbe.

La présente invention a pour objet de remédier en tout ou partie aux inconvénients précités et consiste à cet effet en un procédé de traitement contre l'ambroisie comprenant les étapes consistant à :
a) sélectionner une surface végétative au sol comportant au moins un plant d'ambroisie sélectionné en période de croissance ;
b) fournir une source de rayonnement infrarouge à une puissance P donnée ;
c) irradier ledit plant d'ambroisie avec ladite source de rayonnement infrarouge durant un temps d'exposition T adapté à la puissance P de manière à provoquer un choc thermique afin d'obtenir un desséchement folilaire sans brûlage total audit plant d'ambroisie, non destructif des plants environnants et à réduire l'exposition au rayonnement infrarouge pour la surface végétative.

Par puissance P donnée, on entend une puissance constante ou bien une puissance modulable dans une plage de puissances donnée.

Ainsi, le procédé selon la présente invention est un traitement radiatif provoquant un choc thermique au plant d'ambroisie. Par choc thermique on entend une modification du photosystème du plant d'ambroisie, c'est-à-dire l'ensemble macromoléculaire intervenant pour la photosynthèse, se traduisant par un dessèchement foliaire du plant. Ce dessèchement foliaire peut alors conduire à la mortalité du plant lorsque le système foliaire du plant supporte énergétiquement le système racinaire. En effet, le système racinaire permet notamment la fixation du plant au sol ainsi que la fourniture d'eau et d'éléments nutritifs nécessaires à la survie du plant.

Le choix du couple (P, τ) est fondamental dans la mesure où l'on souhaite obtenir un choc thermique et non un brûlage total détruisant les plantes environnantes de la surface végétative.

Le choc thermique a également comme conséquence directe d'inhiber la formation des fleurs du plant d'ambroisie. En effet, après le choc thermique, le plant d'ambroisie va utiliser son énergie pour le renouvellement de son système foliaire, et non pour la formation de fleurs.

L'inhibition des fleurs mâles et femelles du plant d'ambroisie permet alors de diminuer de manière significative respectivement la production de pollens et la production de graines. Cette entrave au cycle de reproduction du plant d'ambroisie contribue donc à la lutte contre la prolifération des plants d'ambroisie.

En outre, un tel procédé est sélectif dans la mesure où l'irradiation est dirigée vers le plant d'ambroisie, limitant l'impact de l'irradiation sur des plantes environnantes présentes dans la surface végétative.

Durant la période de croissance du plant d'ambroisie, le plant d'ambroisie est moins résistant au rayonnement infrarouge, améliorant de ce fait l'efficacité du procédé. En effet, durant cette période, le système foliaire supporte énergétiquement le système racinaire du plant. Ainsi, le dessèchement foliaire causé par le choc thermique a une conséquence directe sur l'affaiblissement du système racinaire. En revanche, lorsque le traitement est effectué à un stade plus avancé, le système racinaire possède suffisamment d'énergie stockée pour renouveler le système foliaire, rendant par là-même le traitement moins efficace.

Avantageusement, le plant d'ambroisie est sélectionné, lors de l'étape a), en période sensiblement concomitante à la fin de sa période de levée.

Durant cette période, le plant d'ambroisie est très peu résistant au rayonnement infrarouge, rendant l'efficacité du procédé optimale. On entend par fin de période de levée la phase d'apparition des cotylédons, c'est-à-dire des premières feuilles embryonnaires.

Dans un mode de mise en oeuvre de l'invention, l'étape b) est réalisée avec un brûleur radiant à gaz.

Les brûleurs radiants à gaz présentent notamment des avantages de compacité, de robustesse et d'efficacité.

Selon un mode de mise en oeuvre, l'étape b) est réalisée avec un brûleur radiant à gaz comportant un support de combustion muni de fibres métalliques, lesdites fibres métalliques étant portées à incandescence par une combustion d'un mélange air comburant/gaz combustible de manière à ce que lesdites fibres métalliques émettent un rayonnement infrarouge.

Les fibres métalliques permettent d'obtenir un brûleur avec une forme adaptable et flexible.

Selon une caractéristique, l'étape c) est réalisée de manière à ce que toute augmentation (respectivement diminution) de la puissance P soit compensée par une diminution (respectivement augmentation) du temps d'exposition τ.

L'objectif est d'obtenir un choc thermique optimal du plant d'ambroisie et non un brûlage total du plant.

De préférence, l'étape b) est réalisée de telle sorte que P > 90 kW/m²_{.}

De manière avantageuse, l'étape c) est réalisée de telle sorte que 2s ≤ τ ≤ 4s.

Ainsi, le temps d'exposition τ reste suffisamment faible pour envisager une irradiation de grandes surfaces d'infestation en employant par exemple des moyens de défilement de la source de rayonnement infrarouge.

Dans un mode de mise en oeuvre, l'étape c) est réalisée de manière itérative dans une période de quinze jours.

Au bout d'une période sensiblement égale à quinze jours suivant le choc thermique, il a été constaté expérimentalement que le photosystème du plant d'ambroisie possède une énergie minimale. Ainsi, il devient intéressant de réitérer l'étape c) afin de provoquer un nouveau choc thermique durant cette période et d'augmenter ainsi l'efficacité du traitement.

D'autres caractéristiques et avantages de la présente invention apparaîtront à la lecture de la description détaillée ci-après d'un exemple de mise en oeuvre non limitatif, en faisant référence aux dessins annexés sur lesquels :
- la figure 1 est une vue de dessus d'un dispositif permettant la mise en oeuvre du procédé selon l'invention ;
- la figure 2 est une vue en perspective du dispositif illustré à la figure 1 ;
- la figure 3 est un graphique représentant le pourcentage de dessèchement foliaire pour un ensemble de lots traités lors d'une semaine S, le dessèchement foliaire étant observé deux semaines après traitement ;
- la figure 4 est un graphique représentant, pour une série de test, l'évolution du pourcentage de dessèchement foliaire observé deux semaines après traitement en fonction du lot, soit en fonction de la semaine où a été effectué le traitement ;
- la figure 5 est un graphique représentant, pour deux séries de test, le nombre moyen de fleurs de chaque lot en fonction de la semaine où a été effectué le traitement ;
- la figure 6 est un graphique représentant l'évolution de la croissance relative des plants pour l'ensemble des lots traités lors de la semaine S, la croissance relative étant observée en fin de saison ;
- la figure 7 est un graphique représentant l'évolution du pourcentage de la mortalité pour l'ensemble des lots traités lors de la semaine S, la mortalité étant observée en fin de saison ;
- la figure 8 est un graphique représentant l'évolution du pourcentage de mortalité observée deux semaines après traitement, pour une série de test, en fonction du lot, soit en fonction de la semaine où a été effectué le traitement.

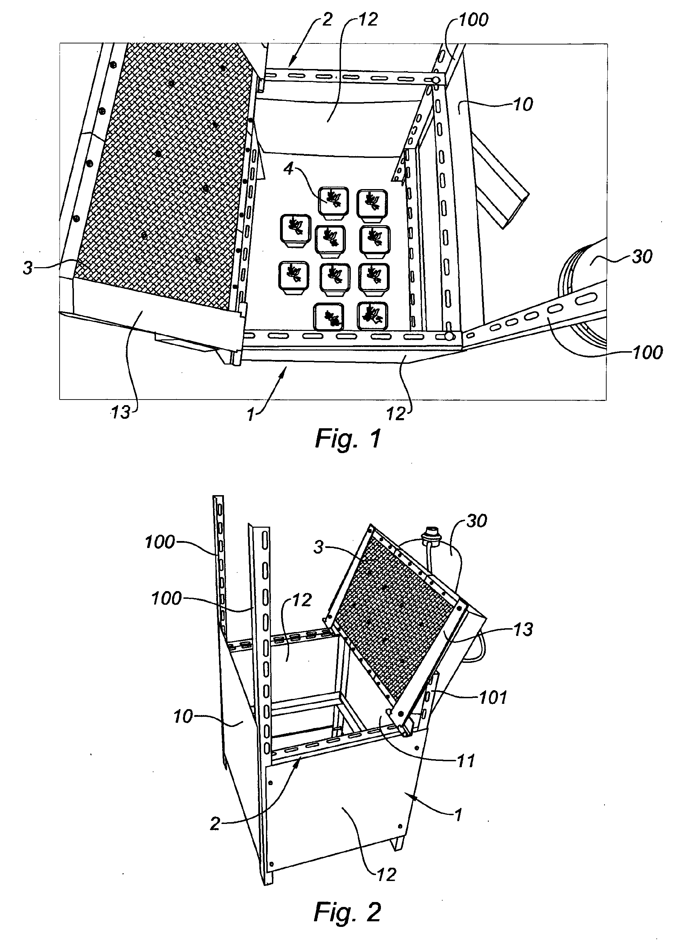

Le dispositif 1 illustré sur les figures 1 et 2 présente une armature supportant quatre panneaux délimitant une structure parallélépipédique 2 sans fond : un panneau frontal 10, un panneau arrière 11 (non visible sur la figure 1 mais représenté sur la figure 2) et deux panneaux latéraux 12. L'armature comprend deux premiers montants 100 verticaux formant moyens de préhension et deux seconds montants 101 verticaux, les deux seconds montants 101 étant plus courts que les deux premiers montants 100. Un seul second montant 101 est visible sur la figure 2.

En outre, l'armature supporte un panneau de dessus 13 monté mobile entre une position ouverte dans laquelle il libère l'ouverture définie par la face supérieure de la structure parallélépipédique 2, et une position fermée dans laquelle il obture entièrement ladite ouverture. Le panneau de dessus 13 est représenté en position ouverte sur les figures 1 et 2. Les deux seconds montants 101 forment alors butée pour le panneau de dessus 13 en position ouverte.

La face interne du panneau de dessus 13 est équipée d'un brûleur 3 radiant à gaz, alimenté par une bonbonne 30 de gaz. Le brûleur 3 comporte un support de combustion en matériau réfractaire c'est-à-dire résistant à la chaleur. En l'occurrence, le dispositif 1 utilise un support en Fecralloy®. Le support de combustion est muni de fibres métalliques tricotées, par exemple du type Bekinit®200S, les fibres métalliques étant portées à incandescence par une combustion d'un mélange air comburant/gaz combustible de manière à ce que les fibres métalliques émettent un rayonnement infrarouge. La gamme de puissances P du rayonnement infrarouge obtenu est comprise entre 90 et 500 kW/m²_{.}

Une pluralité de plants d'ambroisie 4 (820 plants) est sélectionnée lors d'une semaine (notée ci-après S), correspondant à une période de croissance des plants, sensiblement concomitante à la fin de la période de levée.

Des séries de test ont été effectuées, pour différentes puissances P comprises entre 15 kW et 30 kW ainsi que pour différents taux d'exposition τ compris entre 2 et 7 s. Ces séries de test sont répertoriées dans le tableau 1.

**Tableau 1**

| Série | Temps d'exposition τ (s) | Puissance P (kW) |
|---|---|---|
| A (témoin) | 0 | 0 |
| B | 2 | 15 |
| C | 3 | 15 |
| D | 4 | 15 |
| E | 5 | 15 |
| F | 6 | 15 |
| G | 7 | 15 |
| H | 3 | 22 |
| I | 3 | 26 |
| J | 3 | 30 |

Pour chaque série de test, chaque plant d'ambroisie 4 est ménagé à l'intérieur de la structure parallélépipédique 2 du dispositif 1. Le panneau de dessus 13 est disposé en position fermée si bien que chaque plant d'ambroisie 4 est surmonté par le brûleur 3 dont le rayonnement infrarouge est alors sous incidence sensiblement normale.

De plus, pour chaque série de test (excepté le témoin), un premier lot de 10 plants a été traité lors de la semaine S, puis un second lot a été traité lors de la semaine suivante (semaine S+1). Ainsi, un nouveau lot de 10 plants a été traité hebdomadairement jusqu'à la semaine S+8. Ces différents lots sont rassemblés dans le tableau 2.

**Tableau 2**

| Semaine | S | S+1 | S+2 | ... | S+8 |
|---|---|---|---|---|---|
| Série | | | | | |
| B | B1 | B2 | B3 | ... | B9 |
| C | C1 | C2 | C3 | ... | C9 |
| D | D1 | D2 | D3 | ... | D9 |
| E | E1 | E2 | E3 | ... | E9 |
| F | F1 | F2 | F3 | ... | F9 |
| G | G1 | G2 | G3 | ... | G9 |
| H | H1 | H2 | H3 | ... | H9 |
| I | I1 | 12 | 13 | ... | 19 |
| J | J1 | J2 | J3 | ... | J9 |

Par exemple, le lot B2 a été traité lors de semaine S+1 avec un couple (P, τ) correspondant à la série B c'est-à-dire (2 s, 15 kW).

Enfin, des relevés ont été effectués pour chaque lot, moyennés sur les 10 plants composant chaque lot, afin de mesurer notamment leur évolution en termes de dessèchement foliaire, de floraison, de croissance et de mortalité.

Tout d'abord, une étude préliminaire a été réalisée en comparant les plants d'un même lot afin d'établir que les changements de comportement du plant sont dus au traitement radiatif différent et non à un caractère intrinsèque au plant.

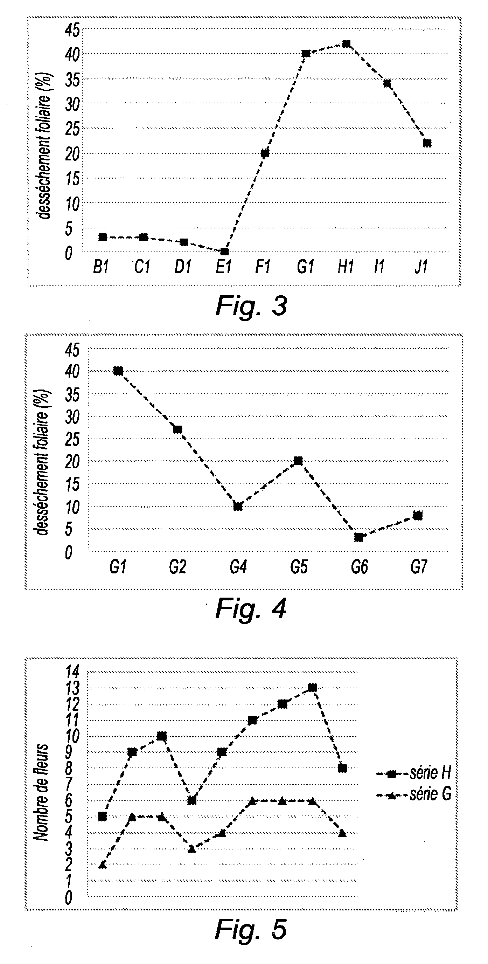

Concernant l'étude du dessèchement foliaire, on constate sur la figure 3 que le traitement est plus efficace sur le dessèchement foliaire pour les séries G, H, I, et J. En d'autres termes, le dessèchement foliaire est maximisé pour certains couples de valeurs (P, τ) vérifiant la propriété selon laquelle toute augmentation (respectivement diminution) de la puissance P doit être compensée par une diminution (respectivement augmentation) du temps d'exposition τ.

En outre, il apparaît sur la figure 4, via la série G, que le traitement est plus efficace lorsque celui-ci est précoce, c'est-à-dire lorsque le traitement est effectué lors des semaines S et S+1, sur des plants d'ambroisie sélectionnés à la fin de leur période de levée.

Concernant l'étude de la floraison en fin de saison, la figure 5 révèle, par les séries H et G, que les plants traités précocement présentent en moyenne moins de fleurs que les plants traités à un stade plus avancé.

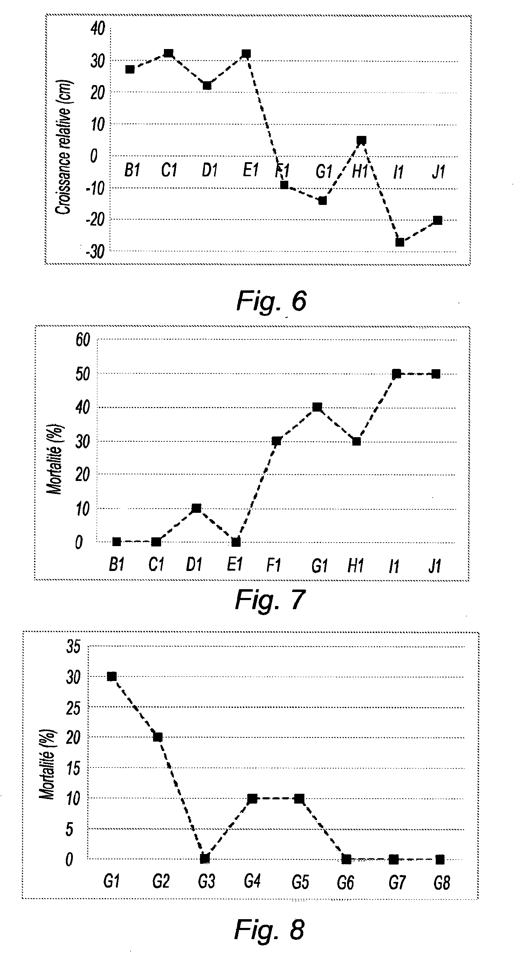

Concernant l'étude de la croissance des plants, la figure 6 montre que la croissance relative est plus faible et durable pour les séries F, G, I et J c'est-à-dire lorsque le temps d'exposition τ est long ou alors que la puissance P est importante.

Concernant l'étude de la mortalité des plants, la figure 7 révèle que la mortalité est plus élevée pour les séries F, G, H, I et J. Ainsi, conformément à l'intuition, la mortalité est d'autant plus élevée que P et τ sont importants. On constate également que la mortalité est très élevée pour les plants traités précocement, pouvant atteindre jusqu'à 50%.

La figure 8 montre, via la série G, que le taux de mortalité décroît très rapidement lorsque le traitement est effectué à un stade avancé.

Enfin, il a été constaté expérimentalement qu'au bout d'une période sensiblement égale à quinze jours suivant le choc thermique, le photosystème du plant d'ambroisie possède une activité minimale. Ainsi, il devient intéressant de provoquer un second choc thermique durant cette période afin d'augmenter l'efficacité du traitement.

A titre illustratif, en faisant l'hypothèse que le second choc thermique permet d'obtenir des résultats similaires au choc thermique initial, le tableau 3 montre une extrapolation sur le taux de mortalité et la réduction du nombre de fleurs que l'on pourrait obtenir avec un double choc thermique.

**Tableau 3**

| | Nombre de plants | Nombre de fleurs |
|---|---|---|
| Témoins | 1000 | 6000 |
| Après premier choc thermique | 500 | 2040 |
| Après second choc thermique | 250 | 690 |

Ainsi, un double choc thermique pourrait conduire à une mortalité de l'ordre de 75% des plants traités et une réduction de près d'un facteur 10 du nombre total de fleurs.

Bien entendu, l'exemple de réalisation évoqué ci-dessus ne présente aucun caractère limitatif, et d'autres détails et améliorations peuvent être apportés au procédé selon l'invention, sans pour autant sortir de l'invention où d'autres mises en oeuvre du procédé peuvent être réalisées.

## Revendications

1. Procédé de traitement contre l'ambroisie comprenant les étapes consistant à :
a) sélectionner une surface végétative au sol comportant au moins un plant d'ambroisie sélectionné en période de croissance ;
b) fournir une source de rayonnement infrarouge à une puissance P donnée ;
c) irradier ledit plant d'ambroisie avec ladite source de rayonnement infrarouge durant un temps d'exposition T adapté à la puissance P de manière à provoquer un choc thermique afin d'obtenir un desséchement folilaire sans brûlage total audit plant d'ambroisie, non destructif des plants environnants et à réduire l'exposition au rayonnement infrarouge pour la surface végétative.

2. Procédé selon la revendication 1, dans lequel le plant d'ambroisie est sélectionné, lors de l'étape a), en période sensiblement concomitante à la fin de sa période de levée.

3. Procédé selon la revendication 1 ou 2, dans lequel l'étape b) est réalisée avec un brûleur radiant à gaz.

4. Procédé selon la revendication 3, dans lequel l'étape b) est réalisée avec un brûleur radiant à gaz comportant un support de combustion muni de fibres métalliques, lesdites fibres métalliques étant portées à incandescence par une combustion d'un mélange air comburant/gaz combustible de manière à ce que lesdites fibres métalliques émettent un rayonnement infrarouge.

5. Procédé selon l'une quelconque des revendications 1 à 4, dans lequel l'étape c) est réalisée de manière à ce que toute augmentation (respectivement diminution) de la puissance P soit compensée par une diminution (respectivement augmentation) du temps d'exposition T.

6. Procédé selon l'une quelconque des revendications 1 à 5, dans lequel l'étape b) est réalisée de telle sorte que P > 90 kW/m².

7. Procédé selon l'une quelconque des revendications 1 à 6, dans lequel l'étape c) est réalisée de telle sorte que 2s ≤ T ≤ 4s.

8. Procédé selon l'une quelconque des revendications 1 à 7, dans lequel l'étape c) est réalisée de manière itérative dans une période de quinze jours.

## Patentansprüche

1. Behandlungsverfahren gegen Ambrosia, das die Schritte umfasst, die bestehen in einer:
a) Auswahl einer Vegetationsfläche auf dem Boden, die mindestens eine ausgewählte Ambrosiapflanze in der Wachstumsphase aufweist,
b) Bereitstellung einer Infrarot-Strahlungsquelle mit einer bestimmten Leistung P,
c) Bestrahlung der Ambrosiapflanze mit der Infrarot-Strahlungsquelle während einer Expositionszeit T, die an die Leistung P derart angepasst ist, dass ein thermischer Schock ausgeübt wird, der bei der Ambrosiapflanze, ohne die Pflanzen in der Umgebung zu zerstören, eine Austrocknung der Blätter ohne vollständige Verbrennung bewirkt und die Exposition gegenüber der Infrarotstrahlung auf die Vegetationsfläche beschränkt wird.

2. Verfahren nach Anspruch 1, wobei die Ambrosiapflanze bei Schritt a) in einem Zeitraum ausgewählt wird, der etwa das Ende ihrer Wachstumsphase begleitet.

3. Verfahren nach Anspruch 1 oder 2, wobei der Schritt b) mit einem Gas-Strahlungsbrenner durchgeführt wird.

4. Verfahren nach Anspruch 3, wobei der Schritt b) mit einem Gas-Strahlungsbrenner durchgeführt wird, der einen mit Metallfasern ausgestatteten Verbrennungsträger aufweist, wobei die Metallfasern durch die Verbrennung eines Gemischs aus Verbrennungsluft und Verbrennungsgas derart zum Glühen gebracht werden, dass die Metallfasern eine Infrarotstrahlung senden.

5. Verfahren nach einem der Ansprüche 1 bis 4, wobei der Schritt c) derart durchgeführt wird, dass die gesamte Erhöhung (beziehungsweise Senkung) der Leistung P von einer Senkung (beziehungsweise Erhöhung) der Expositionszeit T kompensiert wird.

6. Verfahren nach einem der Ansprüche 1 bis 5, wobei der Schritt b) derart durchgeführt wird, dass P > 90 kW/m² ist.

7. Verfahren nach einem der Ansprüche 1 bis 6, wobei der Schritt c) derart durchgeführt wird, dass 2s ≤ T ≤ 4s.

8. Verfahren nach einem der Ansprüche 1 bis 7, wobei Schritt c) während eines Zeitraums von zwei Wochen wiederholend durchgeführt wird.

## Claims

1. A treatment method against ambrosia comprising the steps:
a) selecting a vegetative surface with soil including at least one young ambrosia plant selected during a growth period;
b) providing a source of infrared radiation with a given power P;
c) irradiating said ambrosia plant with said source of infrared radiation for an exposure time T adapted to the power P so as to cause a thermal shock in order to obtain foliar drying without total burning at said ambrosia plant without destroying surrounding plants and reducing exposure to infrared radiation for the vegetative surface.

2. The method according to claim 1, wherein the ambrosia plant is selected, during step a), in a period substantially concomitant with the end of its emergence period.

3. The method according to claim 1 or 2, wherein step b) is carried out with a radiant gas burner.

4. The method according to claim 3, wherein step b) is carried out with a radiant gas burner including a combustion support provided with metal fibers, said metal fibers being brought to incandescence by combustion of an oxidizing air/combustible gas blending so that said metal fibers emit infrared radiation.

5. The method according to any of claims 1 to 4, wherein step c) is carried out so that any increase (decrease respectively) of the power P is compensated with a decrease (increase respectively) of the exposure time T.

6. The method according to any of claims 1 to 5, wherein step b) is carried out so that P > 90kW/m².

7. The method according to any of claims 1 to 6, wherein step c) is carried out so that 2s ≤ T ≤ 4s.

8. The method according to any of claims 1 to 7, wherein step c) is carried out iteratively within a period of fifteen days.
